# EUROPEAN PATENT APPLICATION

(11) **EP 4 552 997 A1**
(43) Date of publication of application: **14.05.2025**
(21) Application number: 22950361.0
(22) Date of filing: 06.09.2022
(51) Int. Cl.: B65D 77/04, B65D 43/16, B65D 83/00

(54) **ECOFRIENDLY CONTAINER**

(30) Priority: 07.07.2022 KR 20220083954; 02.09.2022 KR 20220111437
(71) Applicant: Heo, Dong Kyu, Paju-Si Gyeonggi-do 10881 (KR); Lee, Hyun Yong, Seoul 04419 (KR)
(72) Inventor: Heo, Dong Kyu, Paju-Si Gyeonggi-do 10881 (KR); Lee, Hyun Yong, Seoul 04419 (KR)
(74) Representative: Gulde & Partner
(86) International application number: PCT/KR2022/013372
(87) International publication number: WO 2024/010136

(57) **Abstract**

The present invention provides an ecofriendly container that has an assembly structure in which an inner case can be easily separated from an outer case, is implemented to enable recycling of the separated inner case and outer case, and thus can reduce waste and construct a recirculation system of materials.

## Description

### Technical Field

The present disclosure relates to an eco-friendly container and, more particularly, to an eco-friendly container made of recyclable materials.

### Background Art

Medicines are manufactured in various dosage forms such as liquids, powders, and tablets (pills). The reason for offering a diverse range of dosage forms is to maximize the patient's convenience and effectiveness of taking medicines.

The storage conditions, especially storage containers, of medications play a crucial role in maintaining efficacy and potency of medicines. Storage containers may vary depending on the type of medicine and are often made of PP or PET materials.

However, because PP or PET materials have low hygroscopicity, they cannot shield pharmaceutical products from moisture intrusion. Liquid formulations may not undergo major problems even when manufactured with the PP or PET materials, but for powders and tablets, a separate desiccant is often provided in a storage container to maintain the efficacy of medicines that are highly sensitive to moisture.

In this regard, a document of related art (Korean Patent) No. 10-1726981 discloses "APPARATUS FOR PROTECTING TABLET AND TABLET CONTAINER USING THE SAME". The tablet container is provided separately, and a desiccant inserted into the container plays the role of absorbing moisture inside the container and keep the medicine dry.

The above-described tablet container, however, requires a separately provided desiccant and a separate space to accommodate the desiccant, which makes the configuration of the container complicated. Moreover, problems may arise where a desiccant leaks and mixes with pharmaceuticals or contaminates the surrounding environment, and there is the inconvenience of having to disassemble the components for recycling.

Meanwhile, carbon neutrality, which means lowering actual carbon emissions to "zero" level in order to reduce greenhouse gases as much as possible, is emerging as a paradigm of the 4th Industrial Revolution era.

Accordingly, from an individual perspective, consumers need to participate actively in recycling to sort and separate recyclable materials from non-recyclables, whereas from a corporate perspective, producers need to produce products using eco-friendly materials and design a structure that makes it easy to separate and dispose of product materials. That is, medicine containers should be designed so as to be easily separated and disposed of.

### [Document of Related Art]

### [Patent Document]

(Patent Document 1) Korean Patent No. 10-1726981

### Disclosure

### Technical Problem

The present disclosure is intended to solve the above problems occurring in the related art. An objective of the present disclosure is to provide an eco-friendly container that has an assembly structure in which an inner case can be easily separated from an outer case, is implemented to enable recycling of the separated inner case and outer case, and thus can reduce waste and construct a recirculation system of materials.

### Technical Solution

In order to achieve the above mentioned objectives, there is provided an eco-friendly container for storing a medicine, the container including: an outer case including an opening; a cap configured to open and close the opening of the outer case; and an inner case detachably inserted into the outer case through the opening.

In addition, the outer case may be made of a material including PET, and the inner case may be made of a material including zeolite.

In addition, the outer case may further include a first accommodation space for accommodating the inner case, whereas the inner case may further include a second accommodation space for accommodating the medicine, and the inner case may be separated from the outer case by a translational motion.

In addition, the outer case may include a pressing part provided on a bottom surface thereof to push up the inner case from an outside of the outer case.

In addition, the outer case may include a pressing gap formed along a circumference of the pressing part to deform the pressing part.

In addition, the outer case may include a cap jaw provided on an upper part of the outer case and protruding along a circumference of the outer case.

In addition, the outer case may further include a ring part located at a top of the outer case and forming a penetration area, and the cap may include a hook part extending toward a bottom of the cap, wherein the hook part may pass through the penetration area and may combine with the ring part.

In addition, the cap may further include a fitting part for inserting an upper end of the outer case into an interior of the cap; and a brim part formed by extending from the fitting part toward an outside of the cap, and the hook part may extend from a lower surface of the brim part.

In addition, the outer case may include: a fitting jaw provided along an upper exterior surface of the outer case; and a hook part formed by connecting to the outer case, and the cap may include: a fitting part for inserting the fitting jaw into an interior of the cap; and a hook groove through which the hook part passes and joins.

In addition, the outer case may further include a plurality of protrusion parts formed on an interior surface thereof, wherein the protrusion parts may contact an exterior surface of the inner case to create an air passage in the first accommodation space.

In addition, the inner case may include a plurality of protrusion parts formed on an exterior surface thereof, wherein the protrusion parts may contact an interior surface of the outer case to create an air passage in the first accommodation space.

In addition, the inner case may have an exterior surface in a shape of a polygonal pillar, and edges of the exterior surface may contact an interior surface of the outer case to create an air passage inside the first accommodation space.

In addition, the inner case may include a thread-shaped protrusion part on an exterior surface thereof.

In addition, the outer case may further include a fixing jaw provided in a vertical direction on an interior surface thereof to secure the inner case, and the inner case may include a fixing groove on an exterior surface thereof through which the fixing jaw passes, wherein the fixing groove may become shallower in depth from a top to a bottom of the inner case.

In addition, the inner case may include a grip part that protrudes from an upper end thereof and is held by a user.

In addition, the inner case may be formed such that the upper end thereof slopes downward from a first height to a second height, and the grip part may be formed to extend upward from the second height.

In addition, the grip part may include a grip groove provided on at least one of exterior and interior surfaces thereof.

In addition, the grip part may have elasticity, and may bend in a direction of a second accommodation space of the inner case when the cap is closed, and may be restored to a default state thereof when the cap is opened.

Meanwhile, according to an embodiment of the present disclosure, there is provided an ecofriendly container that is inserted into an outer case and sealed with a cap, the container including: an inner case provided with a grip part, wherein the grip part may include a grip groove provided on exterior and interior surfaces thereof, may be at least partially exposed to an upper part of the outer case when inserted into the outer case, may be bent when the cap is closed, and may be restored to a default state thereof by pushing the cap when the cap is opened.

In addition, the inner case may include: two fixing grooves provided on an exterior surface thereof to at least a certain height; and two fixing slits provided to correspond to the fixing grooves from the certain height, and the grip part may be positioned between the two fixing slits from the certain height.

### Advantageous Effects

The present disclosure has an assembly structure that allows an inner case to be easily separated from an outer case, allowing a user to easily separate the materials, and is implemented to enable recycling of the separated inner case and outer case, and thus can reduce waste and construct a recirculation system of materials.

### Description of Drawings

FIG. 1 is a view showing an eco-friendly container according to an embodiment of the present disclosure.
FIG. 2 is a view showing the separated state of an eco-friendly container according to an embodiment of the present disclosure.
FIG. 3a is a view showing a pressing part and a pressing gap before pressing according to an embodiment of the present disclosure.
FIG. 3b is a view showing a pressing part and a pressing gap after pressing according to an embodiment of the present disclosure.
FIG. 3c is a view showing a pressing part and a pressing gap before pressing according to an embodiment of the present disclosure.
FIG. 3d is a view showing a pressing part and a pressing gap after pressing according to an embodiment of the present disclosure.
FIG. 4a is a view showing the state before combining a hook part and a ring part according to an embodiment of the present disclosure.
FIG. 4b is a view showing the state after combining a hook part and a ring part according to an embodiment of the present disclosure.
FIG. 4c is a view showing the state after combining a hook part and a ring part according to an embodiment of the present disclosure.
FIG. 4d is a view showing the state before combining a hook part and a hook groove according to an embodiment of the present disclosure.
FIG. 4e is a view showing the state after combining a hook part and a hook groove according to an embodiment of the present disclosure.
FIG. 5 is a view showing a vertical protrusion part of an inner case according to an embodiment of the present disclosure.
FIG. 6 is a view showing an inner case and an air passage according to an embodiment of the present disclosure.
FIG. 7 is a view showing an inner case and an air passage according to an embodiment of the present disclosure.
FIG. 8 is a view showing a spiral protrusion part of an inner case according to an embodiment of the present disclosure.
FIG. 9 is a view showing a fixing groove of an inner case according to an embodiment of the present disclosure.
FIG. 10 is a view showing a fixing jaw of an outer case according to an embodiment of the present disclosure.
FIG. 11a is a view showing a state in which a fixing groove and a fixing jaw are combined according to an embodiment of the present disclosure.
FIG. 11b is a view showing a state in which a fixing groove and a fixing jaw are separated according to an embodiment of the present disclosure.
FIG. 12a is a view showing a grip part in a bent state according to an embodiment of the present disclosure.
FIG. 12b is a view showing changes in a grip part according to an embodiment of the present disclosure.
FIG. 12c is a view showing a state in which a grip part prevents a cap from closing according to an embodiment of the present disclosure.

### Mode for Invention

Hereinafter, an eco-friendly container 1 according to an embodiment of the present disclosure will be described.

Those skilled in the art will be able to develop various devices that embody the principles of the present disclosure and are included within the spirit and scope of the present disclosure, although not explicitly described or shown herein. In addition, it should be understood that all conditional terms and embodiments listed in this specification are, in principle, expressly intended solely for the purpose of enabling the inventive concept to be understood, and not as limiting to the embodiments and states specifically listed as such.

The above-described objectives, features and advantages will become clearer through the following detailed description of the present disclosure in conjunction with the accompanying drawings, and accordingly, a person skilled in the art in the technical field to which the present disclosure pertains will be able to easily implement the technical idea of the present disclosure.

The embodiments described herein will be explained with reference to idealized drawings of the present disclosure. The form of the illustration may be modified depending on manufacturing technology and/or tolerance. Accordingly, the embodiments of the present disclosure are not limited to the specific form shown, but also include changes in form produced according to the manufacturing process.

In describing various embodiments, components that perform the same function will be given the same names and the same reference numbers for convenience even if the embodiments are different. Furthermore, for convenience, the description of the configuration and operation already described in other embodiments will be omitted.

Meanwhile, the expression "at least one of A, B and C" means consisting of one, two or three of A, B and C, and the expression "at least one D" means that D is one or more. In addition, the expression "upper (top) end of E" refers to the end located at the upper (top) part of E.

First, the basic structure of the eco-friendly container 1 according to an embodiment of the present disclosure will be described.

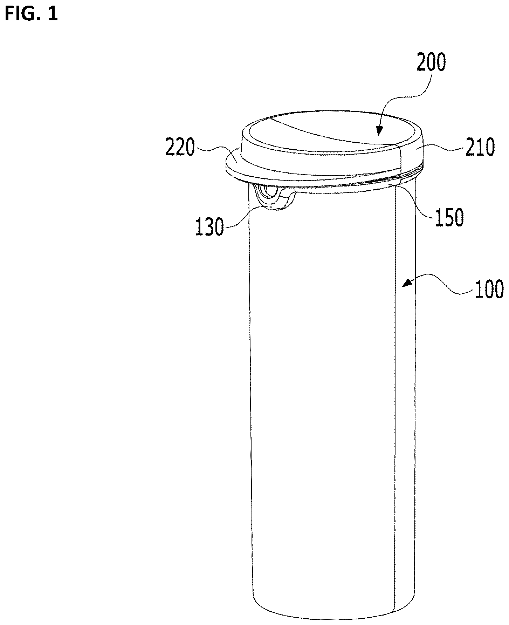

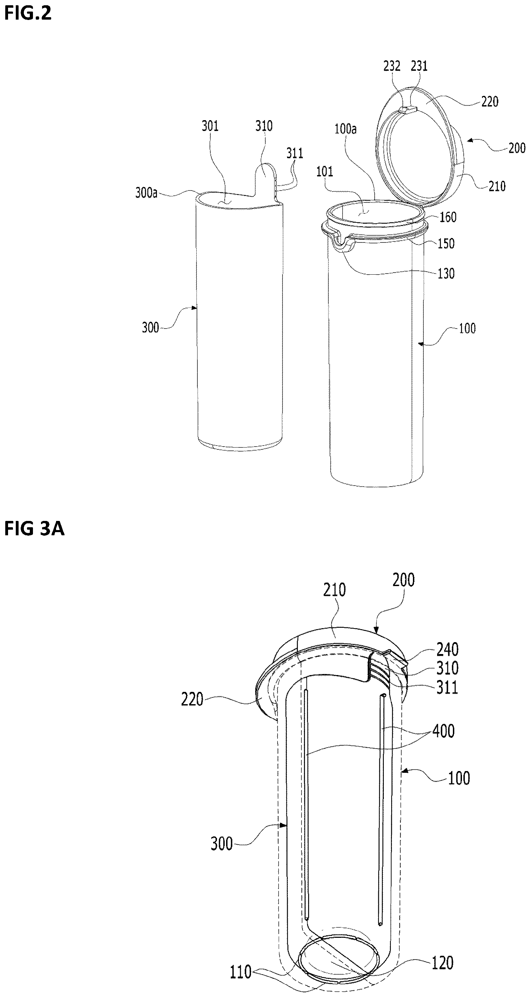

FIG. 1 is a view showing the eco-friendly container 1 according to an embodiment of the present disclosure. FIG. 2 is a view showing the separated state of the eco-friendly container 1 according to an embodiment of the present disclosure.

Referring to FIGS. 1 and 2, the eco-friendly container 1 according to an embodiment of the present disclosure may store medicine and may include: an outer case 100 including an opening 100a; a cap 200 for opening and closing the opening 100a of the outer case 100; and an inner case 300 detachably inserted into the outer case 100 through the opening 100a.

In addition, the outer case 100 according to an embodiment of the present disclosure may further include a first accommodation space 101 for accommodating the inner case 300. The inner case 300 may further include a second accommodation space 301 for accommodating the medicine. The inner case 300 may be separated from the outer case 100 by a translational motion.

The outer case 100 may include the opening 100a. The outer case 100 is exposed to the outside in the eco-friendly container 1 and may be held by a user. The outer case 100 may include an exterior surface exposed to the outside and an interior surface that contacts or faces the inner case 300.

The inner case 300 may be inserted into or separated from the outer case 100 through the opening 100a. The outer case 100 may be provided in the form of a cylinder, a prism, etc. The outer case 100 may be formed in a structure corresponding to the inner case 300 so as to easily remove the inner case 300. The corresponding structure will be described later.

The cap 200 may be used to open and close the opening 100a of the outer case 100. The cap 200 may be connected to the outer case 100 through a connection part 240. One side of the connection part 240 may extend from the cap 200, and the other side may extend from the outer case 100. However, the present disclosure is not necessarily limited to a structure in which the cap 200 and the outer case 100 are connected by the connecting part 240, and a structure in which the cap 200 and the outer case 100 are connected by the connecting part 240, and a structure are independent and separated from each other is also possible.

When the cap 200 is structured separately from the outer case 100, the cap 200 has threads on the interior surface thereof, and the outer case 100 has threads on the upper exterior surface thereof so as to be coupled to each other.

On the other hand, when the cap 200 is structured to be connected to the outer case 100 by the connection part 240, the outer case 100 is provided with a fitting jaw 160 formed along the top end or upper exterior surface and may be press-fitted with the cap 200. The fitting jaw 160 may maintain the cap 200 in a closed state. However, the above-described press-fitting method may also be applied to the structure in which the cap 200 and the outer case 100 are separated.

The inner case 300 may be inserted inside the outer case 100 and may be separated from the inside of the outer case 100. The inner case 300 may be inserted or separated through the opening 100a of the outer case 100. The inner case 300 may include an exterior surface that contacts or faces the outer case 100 and an interior surface that contacts the medicine.

In addition, the inner case 300 may further include a lower surface, and the lower surface may be concave upward or may be formed as a flat surface. The inner case 300 may also include an internal opening 300a at the top thereof, and medicine may be stored through the internal opening 300a.

When the inner case 300 is fully inserted into the outer case 100, the upper end of the inner case 300 may be located below the upper end of the outer case 100. That is, the internal opening 300a of the inner case 300 may be located below the opening 100a of the outer case 100, and the internal opening 300a may be located in the first accommodation space 101.

The inner case 300 may be provided in the form of a cylinder, a prism, etc. The inner case 300 may be formed in a structure corresponding to the outer case 100 so as to be easily removed from the outer case 100. The corresponding structure will be described later.

The outer case 100 may include the first accommodation space 101, and the inner case 300 may include the second accommodation space 301. The first accommodation space 101 may refer to a space in which the inner case 300 is accommodated, and the second accommodation space 301 may refer to a space in which medicine is accommodated.

The inner case 300 may be separated from the outer case 100 through a translational motion or a sliding motion. The translational motion or sliding motion is in contrast to rotational motion, and the inner case 300 may be separated from the outer case 100 without rotation. In order for the inner case 300 to be easily separated, it is necessary to simplify the structure of the interior surface of the outer case 100 during the separation process of the inner case 300.

That is, there should be minimal or no blocking elements in an opening area 100b where the opening 100a of the outer case 100 is located. The opening area 100b may refer to the first accommodation space 101 that is higher than the upper end of the inner case 300 when the inner case 300 is completely inserted into the outer case 100.

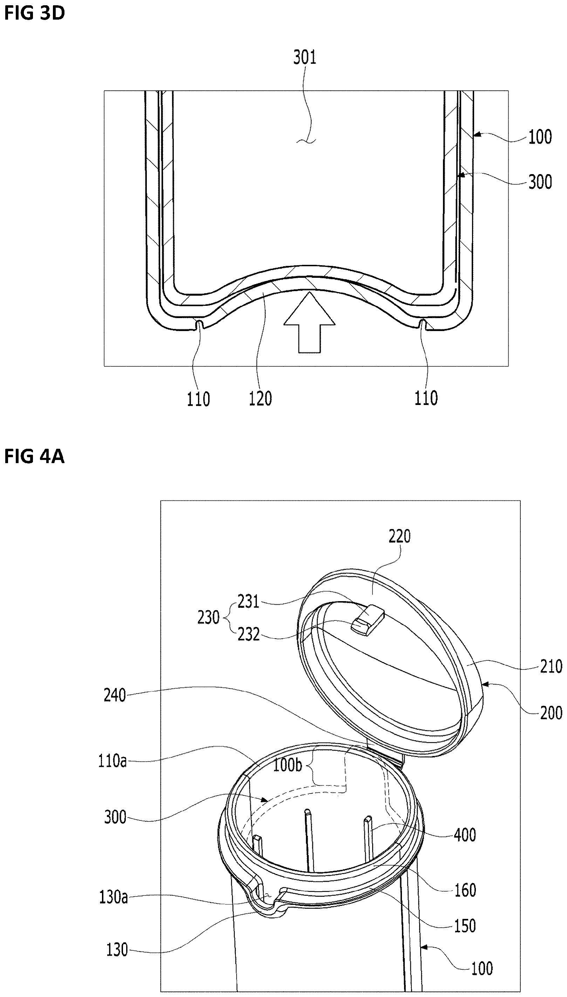

The opening area 100b may refer to the space from the dotted line representing the inner case 300 in FIG. 4a to the upper end of the outer case 100. At this time, the upper end of the inner case 300 may refer to a line formed along the uppermost part of the inner case 300 including a grip part 310. In addition, the upper end of the inner case 300 may refer to a line formed along the uppermost part of the inner case 300 excluding the grip part 310. In other words, the opening area 100b may refer to an area in which the inner case 100 and the outer case 300 do not overlap when the inner case 100 and the outer case 300 are combined.

The opening area 100b of the outer case 100 may have the same cross-sectional area. Additionally, the opening area 100b of the outer case 100 may have the same cross-sectional shape. Additionally, the opening area 100b of the outer case 100 may be formed such that the cross-sectional area increases toward the top.

The structure of the opening area 100b is such that when the inner case 100 is separated from the outer case 300 through a translational or sliding motion, the upper end of the inner case 100 is not disturbed by a blocking element inside the outer case 300. For example, the interior surface of the outer case 100 in the opening area 100b may be configured to have no curved area, recessed area, protruding area, dome area, or bottleneck area in the direction of the first accommodation space 101.

Although the outer case 100 may be configured to have no curved area, recessed area, or protruding area in the direction of the first accommodation space 101, there may be a configuration such as a protrusion part 400 to be described later that does not interfere with the translational or sliding motion of the inner case 300.

The inner case 300 may be fixed to the outer case 100. In this case, "fixed" means a state in which the inner case 300 is completely inserted into the outer case 100, and does not mean a state in which separation is impossible.

At this time, the inner case 300 may be fixed only by friction between the exterior surface of the inner case 300 and the interior surface of the outer case 100. In addition, when the inner case 300 includes the protrusion part 400, fixation may be achieved only by friction between the protrusion part 400 of the inner case 300 and the interior surface of the outer case 100. In addition, when the outer case 300 includes the protrusion part 400, fixation may be achieved only by the friction between the exterior surface of the inner case 300 and the protrusion part 400.

By fixing the inner case 300 only by the friction between the inner case 300 and the outer case 100, and excluding any structure that secures the inner case 300 to the outer case 100, the inner case 300 may be easily separated from the outer case 100.

That is, when the friction between the user's hand and the inner case 300 is greater than the friction between the inner case 300 and the outer case 100, the inner case 300 may be separated from the outer case 100.

Accordingly, the inner case 300 may be separated from the outer case 100 without rotational motion. Furthermore, the inner case 300 may be separated from the outer case 100 only through a translational or sliding motion without damage to at least one of the inner case 300 and the outer case 100.

In addition, to smoothly separate the inner case 300, the interior surface of the outer case 100 and the exterior surface of the inner case 300 may be structured to correspond.

For example, the corresponding structure may refer to a structure in which, when the inner case 300 or the outer case 100 is provided with a jaw, the outer case 100 or the inner case 300 is provided with a groove into which the jaw is inserted so that the inner case 300 may be separated from the outer case 100 only by a translational or sliding motion, a structure in which a jaw is provided in one of the inner case 300 and the outer case 100, and a spiral structure of the inner case 300 and the outer case 100, which will be described later.

Due to the above-described structure, the user may easily separate the inner case 300 from the outer case 100. Thus, components may be separated and disposed of without damaging the inner case 300 or outer case 100, thereby promoting recycling of materials.

Next, the eco-friendly materials of the outer case 100 and the inner case 300 will be described.

The outer case 100 may contain PP and/or PET materials. Additionally, the outer case 100 may be made of post-consumer recycled (PCR) material. PP and PET materials are lightweight, have excellent strength, and are eco-friendly materials that are harmless to the human body and the environment.

The inner case 300 may contain a zeolite material. The inner case 300 may be made of PP matrix containing zeolite, but is not limited thereto.

In this case, zeolite may be obtained naturally or synthetically, may be composed of at least one of zeolite A, zeolite X, and zeolite Y, which are classified according to silicon to aluminum (Si/Al) ratios, may be composed of at least one of FAU zeolite, P1 zeolite, and sodalite, which are classified according to the form (shape) thereof.

The outer case 100 may be made of PP and/or PET materials that are strong and prevent moisture inflow, and the inner case 300 may be made of a zeolite material with strong hygroscopicity. As a result, the eco-friendly container 1 may achieve opposite effects at the same time, with the outer case 100 blocking moisture from the outside and the inner case 300 absorbing moisture from the inside.

In particular, since the inner case 300 is made of a highly hygroscopic material, the inner case 300 may absorb moisture in the second accommodation space 301 and prevent moisture from being absorbed into the medicine.

If a medicine container consists of only the outer case 100 (single case), hygroscopicity cannot be guaranteed and a desiccant must be used. When using a desiccant, a separate space needs to be provided, which may result in complicated configuration and difficulty in separation and disposition of materials.

In contrast, the eco-friendly container 1 according to an embodiment of the present disclosure has the outer case 100 and the inner case 300 in separate configurations and is manufactured to be easily separated, thereby simultaneously ensuring hygroscopicity and ease of separation and disposition of materials.

That is, producers use eco-friendly recycled materials and manufacture eco-friendly containers 1 with an easy-to-separate structure, and users easily separate and dispose of the used containers, thereby achieving the effects of waste reduction and material recirculation.

Next, the structure of the bottom surface of the outer case 100 will be described.

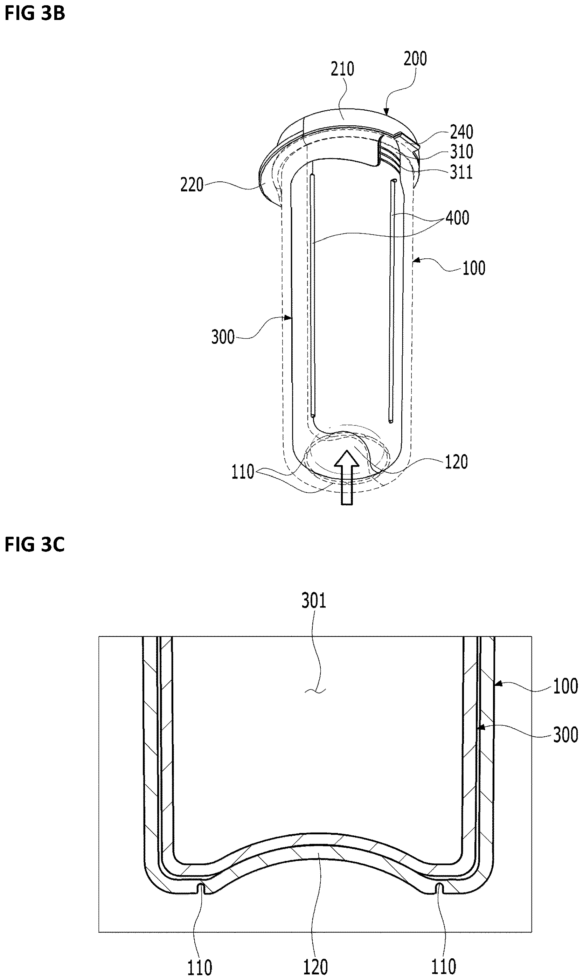

FIG. 3a is a view showing a pressing part 120 and a pressing gap 110 before pressing according to an embodiment of the present disclosure. FIG. 3b is a view showing the pressing part 120 and the pressing gap 110 after pressing according to an embodiment of the present disclosure. FIG. 3c is a view showing the pressing part 120 and the pressing gap 110 before pressing according to an embodiment of the present disclosure. FIG. 3d is a view showing the pressing part 120 and the pressing gap 110 after pressing according to an embodiment of the present disclosure.

Referring to FIGS. 3a and 3d, the outer case 100 may include the pressing part 120 provided on the bottom surface of the outer case 100 to push up the inner case 300 from the outside of the outer case 100.

In addition, the outer case 100 may further include the pressing gap 110 formed along the circumference of the pressing part 120 to deform the pressing part 120.

The outer case 100 may include the opening 100a at the top and may further include side and bottom surfaces. The opening 100a may be located at the top of the side surface, and the bottom surface may be located at the bottom.

The outer case 100 may include the pressing gap 110 and/or the pressing part 120 on the bottom surface thereof. The pressing part 120 is located at the center of the bottom surface, and the pressing gap 110 may be formed along the circumference of the pressing part 120.

The pressing gap 110 may be formed to penetrate the bottom surface of the outer case 100 (hole structure), and may be formed to be recessed upward from the bottom surface of the outer case 100 (gap structure).

To be specific, the pressing gap 110 may be configured as a curved hole structure or gap structure in a circumferential direction along the circumference of the pressing part 120. In addition, the pressing gap 110 may be provided single or in plural, and the plurality of pressing gaps 110 may be provided to be spaced apart from each other.

The pressing gap 110 may allow air to pass between the inside and outside of the outer case 100, which is called a hole structure. In contrast, the pressing gap 110 may be recessed and closed so that the air between the inside and outside of the outer case 100 cannot pass through, which is called a gap structure.

In addition, the pressing gap 110 may be provided alone even when the pressing part 120 is not provided. In this case as well, a plurality of pressing gaps 110 may be provided, and the shape thereof is not limited. That is, the pressing gap 110 may be provided in various shapes such as straight, circular, elliptical, and polygonal in addition to the curved shape described above.

When the pressing gap 110 has a hole structure, the pressing gap 110 may allow air to pass so that the inner case 300 can move smoothly in the outer case 100. When the inner case 300 is inserted into the outer case 100, the air in the first accommodation space 101 may leak out through the pressing gap 110 due to the movement of the inner case 300.

On the other hand, when the inner case 300 is separated from the outer case 100, external air may flow into the first accommodation space 101 through the pressing gap 110 due to the movement of the inner case 300.

When the pressing gap 110 has a gap structure, the pressing gap 110 does not penetrate the outer case 110, and thus the air cannot pass through. Therefore, the outer case 100 may perform a waterproof function.

At this time, the area of the outer case 100 where the pressing gap 110 exists may be thinner than the area where the pressing gap 110 does not exist.

When the pressing part 120 is pressed, the pressing gap 110 may expand itself and move the pressing part 120 upward (FIGS. 3a and 3c). Conversely, when the pressing part 120 is released from a pressed state, the pressing gap 110 may narrow itself and move the pressing part 120 downward (FIGS. 3b and 3d).

The pressing part 120 may be formed concave upward or may be formed flat.

When an external force is applied, the pressing part 120 may move to the first accommodation space 101 and reach a pressed state, and when the external force is removed, the pressing part 120 may move back in the external direction to reach a default state.

The eco-friendly container 1 utilizes the pressing gap 110 and the pressing part 120 to enable the inner case 300 to be easily separated from the outer case 100.

Next, the structure of the outer case 100 and cap 200 will be described.

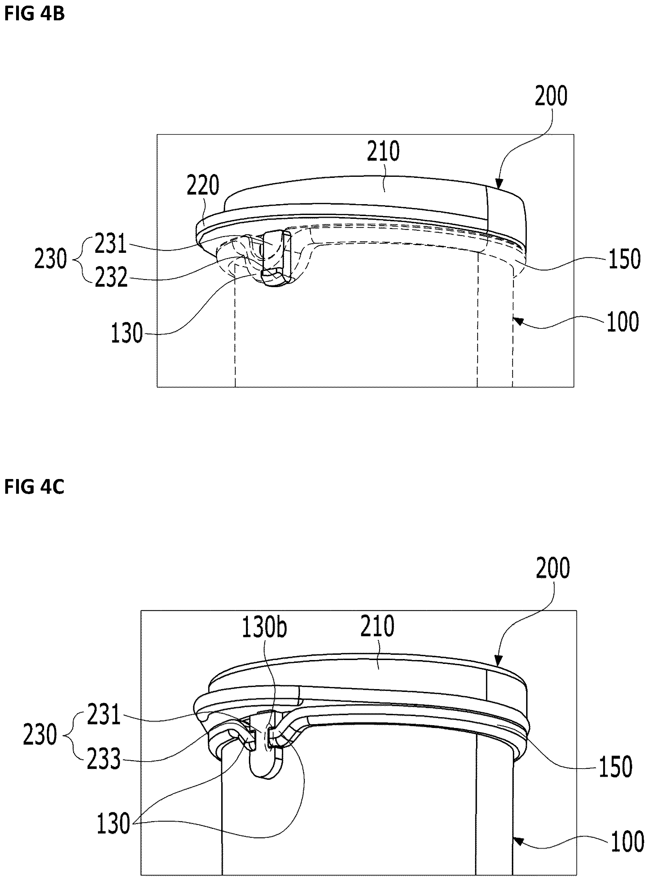

FIG. 4a is a view showing the state before combining a hook part 230 and a ring part 130 according to an embodiment of the present disclosure. FIG. 4b is a view showing the state after combining the hook part 230 and the ring part 130 according to an embodiment of the present disclosure. FIG. 4c is a view showing the state after combining the hook part 230 and the ring part 130 according to an embodiment of the present disclosure.

Referring to FIG. 4a, the outer case 100 according to an embodiment of the present disclosure may include a cap jaw 150 provided on the upper part of the outer case 100 and protruding along the circumference of the outer case 100.

Referring to FIGS. 4a and 4b, the outer case 100 according to an embodiment of the present disclosure may further include the ring part 130 located at the top of the outer case 100 and forming a penetration area 130a. The cap 200 may include the hook part 230 formed to extend toward the bottom of the cap 200. The hook part 230 may pass through the penetration area 130a and be coupled to the ring part 130.

In addition, the cap 200 according to an embodiment of the present disclosure may further include: a fitting part 210 for inserting the upper end of the outer case 100 into the interior of the cap 200; and a brim part 220 extending from the fitting part 210 toward the outside of the cap 200. The hook part 230 may extend from the lower surface of the brim part 220.

The outer case 100 may include the cap jaw 150 at the top thereof. The cap jaw 150 may be located at a distance within the height of the cap 200 from the upper end of the outer case 100. The cap jaw 150 may be provided along the circumference of the outer case 100. The cap jaw 150 may be provided around the entire circumference of the outer case 100, and a portion of the cap jaw 150 may be provided in the form of the ring part 130, which will be described later.

The cap jaw 150 may provide a space in which the cap 200 is seated when the cap 200 closes the opening 100a of the outer case 100. Specifically, the cap jaw 150 may contact the lower end of the cap 200.

That is, the cap jaw 150 may provide a limit for inserting the fitting part 210 into the outer case 100. As a result, even if the cap 200 is closed with excessive force, damage to the cap 200 by the end of the outer case 100 may be prevented.

The outer case 100 may further include the ring part 130. The ring part 130 may be combined with the hook part 230 of the cap 200 to maintain the opening 100a of the outer case 100 in a closed state.

Referring again to FIG. 4a, the ring part 130 may be located at the top of the outer case 100 and may be provided to extend from the cap jaw 150. However, the ring part 130 is not necessarily limited to the structure shown in FIG. 4a, and may be provided independently from the cap jaw 150.

A portion of the ring part 130 may contact the exterior surface of the outer case 100 to form the penetration area 130a. Specifically, the left and right portions of the ring part 130 may contact the exterior surface of the outer case 100, and the central portion of the ring part 130 may be spaced apart from the outer case 100 to form the penetration area 130a. The penetration area 130a is located between the exterior surface of the outer case 100 and the ring part 130 and refers to the area through which the hook part 230 passes.

The ring part 130 may prevent the hook from being exposed to the outside by forming the penetration area 130a between the ring part 130 and the exterior surface of the outer case 100. As a result, the ring part 130 may prevent damage to the cap 200 by protecting the hook part 230 from external impact, catching of the hook part 230, etc.

The ring part 130 shown in FIG. 4a is formed to extend from the cap jaw 150, and both sides of the ring part 130 are in contact with the outer case 100, so that the center of the ring part 130 is spaced apart from the outer case 100. Additionally, the ring part 130 may be formed in a "U" shape, but is not necessarily limited thereto.

The cap 200 may include the hook part 230. The hook part 230 may include: a first part 231 extending downward from the cap 200; and a second part 23s protruding from the first part 231 toward the outside of the outer case 100.

Referring to FIG. 4b, when the opening 100a of the outer case 100 is closed, the hook part 230 may pass through the penetration area 130a of the ring part 130 and be coupled to the inside of the ring part 130.

At this time, a jaw may be provided inside the ring part 130, and the second part 232 of the hook part 230 may be hooked on the jaw of the ring part 130 so as to be coupled to each other. That is, the second part 232 may protrude outward from the outer case 100 and be coupled to the ring part 130.

In this way, as the coupling portion of the hook part 230 and the ring part 130 is formed on the inside of the ring part 130, damage to the cap 200 from the outside may be prevented.

Referring to FIG. 4c, the ring part 130 may be provided to be inclined downward from the cap jaw 150. At this time, the ring part 130 may not be spaced apart from the outer case 100, and the ring part 130 may include two locking areas 130b that are cut areas and provided extending from the cap jaw 150. The locking areas 130b correspond to the penetration area 130a of FIGS. 4a and 4b.

In this case, the hook part 230 may include the first part 231 extending downward from the cap 200, and a third part 233 recessed into the interior from each side of the first part 231.

When the opening 100a of the outer case 100 is closed, the hook part 230 may pass through the locking areas 130b of the ring part 130 and be coupled to the ring part 130. In this case, the locking areas 130b are exposed to the outside, but damage from the outside may be prevented by the brim part 220, which will be described later.

The hook part 230 and the ring part 130 are not limited to the examples of FIGS. 4a to 4c and may have various structures. That is, the hook part 230 and the ring part 130 may be structured so as not to act as a blocking element when separating the inner case 300 from the outer case 100, and may preferably be located outside the outer case 100.

The cap 200 may include the fitting part 210. The fitting part 210 may be formed in a shape that protrudes upward when viewed from the top of the cap 200, and may be formed in a shape that is recessed toward the top when viewed from the bottom. That is, the fitting part 210 may refer to a point where the upper end of the outer case 100 enters. The fitting part 210 of the cap 200 and the fitting jaw 160 of the outer case 100 are press-fitted with each other to maintain the closed state of the opening 100a.

The cap 200 may include the brim part 220. The brim part 220 may extend from the fitting part 210 toward the outside of the cap 200. The brim part 220 may correspond to a point where force acts when the user opens the cap 200.

The cap 200 may be provided with the connection part 240 connected to the outer case 100 on one side and may be provided with the brim part 220 on the other side. That is, when the brim part 220 is lifted by the user, the cap 200 may be opened with the connection part 240 as the axis according to the lever principle.

At this time, the hook part 230 may extend from the lower surface of the brim part 220. When the hook part 230 is located on the brim part 220, the hook part 230 and the ring part 130 can be coupled from the outside of the outer case 100, and thus the ring part 130 may also be located on the exterior surface of the outer case 100.

Such structure allows the inner case 300 to be separated from the outer case 100 without being hindered by any blocking elements. That is, due to the structure in which the hook part 230 and the ring part 130 are fastened to each other on the outside of the outer case 100, the inner case 300 may be easily separated.

The protruding shape of the brim part 220 protects the ring part 130 and the hook part 230 from the outside, and allows the opening 100a of the outer case 100 to be opened by easily opening the cap 200 with a small force according to the lever principle.

That is, according to the eco-friendly container 1 according to an embodiment of the present disclosure, by locating the ring part 130 and the hook part 230 on the outside of the outer case 100, the inner case 300 may be easily separated, the ring part 130 may prevent damage to the cap 200 from the outside by hiding the hook part 230, and the brim part 220 allows the opening 100a of the outer case 100 to be easily opened even with a small force.

Next, another embodiment of the coupling structure of the outer case 100 and the cap 200 will be described.

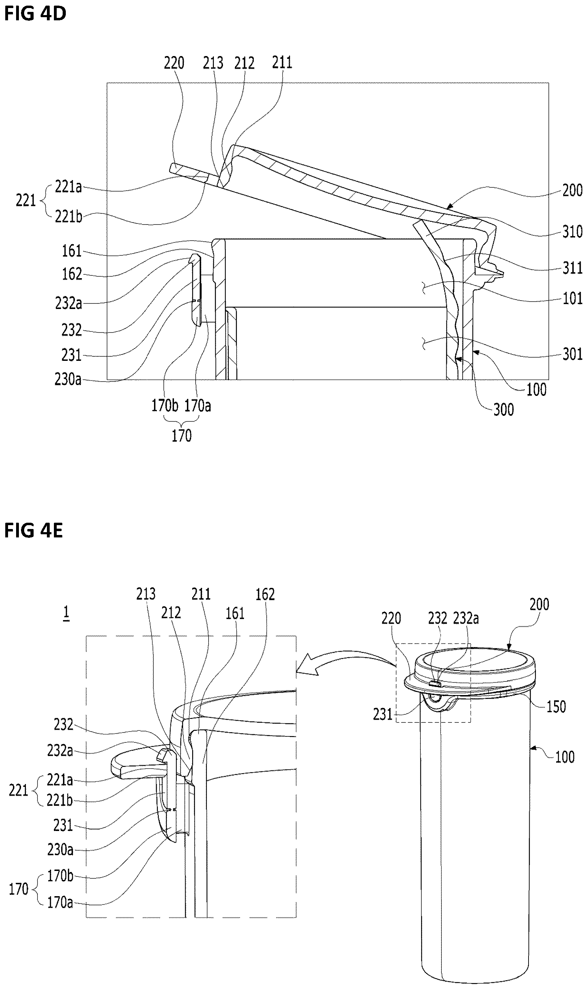

FIG. 4d is a view showing the state before combining a hook part and a hook groove according to an embodiment of the present disclosure. FIG. 4e is a view showing the state after combining a hook part and a hook groove according to an embodiment of the present disclosure.

So far, the structure in which the hook part 230 and the ring part 130 are coupled as the cap 200 includes the hook part 230 and the outer case 100 includes the ring part 130 has been described.

Meanwhile, referring to FIGS. 4d and 4e, the outer case 100 may include the fitting jaw 160 formed along the upper exterior surface thereof, and the hook part 230 formed by being connected to the outer case 100. The cap 200 may include the fitting part 210 for inserting the fitting jaw 160 into the interior of the cap 200, and a hook groove 221 through which the hook part 230 passes and engages.

The outer case 100 may include the hook part 230, and the cap 200 may include the hook groove 221. The hook part 230 may be combined with the hook groove 221.

The outer case 100 may include the hook part 230, a support part 170, and a hook connection part 230a. As previously described, the hook part 230 may include the first part 231 and the second part 232. However, unlike the previous description, the hook part 230 may extend from the support part 170 toward the top, and may be provided directly or indirectly connected to the outer case 100.

The support part 170 may have the same structure as the ring part 130 described above, but unlike the ring part 130, the support part 170 may not form the penetration area 130a. At this time, the support part 170 may separate the hook part 230 from the outer case 100. However, the shape of the support part 170 is not particularly limited, and may be provided in any shape that can space the hook part 230 from the outer case 100.

In this case, the support part 170 may include a first support part 170a and a second support part 170b. The first support part 170a may be located on the exterior surface of the outer case 100 to provide a separation distance between the hook part 230 and the outer case 100. The second support part 170b may be connected to the first support part 170a, and the hook part 230 may be connected to the second support part 170b.

The support part 170 may space the hook part 230 and the outer case 100 to provide space so that the edge of the fitting part 210 is positioned when the cap 200 closes the outer case 100.

At this time, the fitting part 210 may include, at the edge thereof, a 1-1 sealing part 211, a 1-2 sealing part 212, and a 1-3 sealing part 213. That is, the 1-1 sealing part 211, the 1-2 sealing part 212, and the 1-3 sealing part 213 may be located between the hook part 230 and the exterior surface of the outer case 100.

The hook connection part 230a may be located between the support part 170 and the hook part 230, so that one end of the hook connection part 230a may be connected to the support part 170 and the other end of the hook connection part 230a may be connected to the hook part 230. The width of the hook connection part 230a may be narrower than the width of the hook part 230. In this case, the width refers to the length in the direction toward the outside or inside of the outer case 100.

The hook connection part 230a allows the hook part 230 to easily move in the direction toward the outside or inside of the outer case 100. At this time, the hook part 230 may move in the direction toward the outside or inside of the outer case 100 with the hook connection part 230a as an axis. That is, the hook connection part 230a may increase the fluidity of the hook part 230.

The cap 200 may include the hook groove 221. Specifically, the brim part 220 of the cap 200 may include the hook groove 221.

When the hook part 230 is in a closed state, the second part 232 is caught in the hook groove 221, and the cap 200 cannot be opened. At this time, the upward movement of the cap 200 may be restricted by the hook part 230, and the downward movement of the cap 200 may be restricted by the cap jaw 150. As a result, the cap 200 may maintain the outer case 100 in a closed state.

Conversely, when the hook part 230 is in an opened state, the hook part 230 moves toward the inside of the outer case 100 so that the hook part 230 is no longer caught in the hook groove 221, and the cap 200 may be opened.

The cap 200 has a structure that allows the outer case 100 to be easily opened.

When a force toward the inside of the outer case 100 is applied to the first part 231, the hook part 230 may reach an opened state. Conversely, when the force applied to the first part 231 is removed, the hook part 230 may reach a locked state.

Accordingly, the cap 200 may be opened when the user lifts the brim part 220 of the cap 200 while pressing the first part 231 of the hook part 230, and the cap 200 may be opened by this simple operation.

The cap 200 has a structure that allows the outer case 100 to be easily closed.

The fitting part 210 may include the 1-1 sealing part 211, the 1-2 sealing part 212, and the 1-3 sealing part 213. The outer case 100 may include the fitting jaw 160. At this time, the fitting jaw 160 may include a 2-1 sealing part 161 and a 2-2 sealing part 162.

The 1-1 sealing part 211 corresponds to an area recessed from the lateral interior surface of the cap 200 or the fitting part 210 toward the outside of the cap 200. The 1-2 sealing part 212 is formed to extend downward from the 1-1 sealing part 211, and corresponds to an area protruding from the lateral interior surface of the cap 200 or the fitting part 210 in the inward direction of the cap 200. The 1-3 sealing part 213 extends downward from the 1-2 sealing part 212, and corresponds to an area inclined toward the outside of the cap 200.

In a structure where the cap 200 closes the outer case 100, the 1-1 sealing part 211 and the 2-1 sealing part 161 may be positioned to contact or be adjacent to each other. At this time, the 1-2 sealing part 212 and the 2-2 sealing part 162 may be positioned to contact each other. In particular, the contact state of the 1-2 sealing part 212 and the 2-2 sealing part 162 may prevent moisture from entering into the first accommodation space 101.

In the closing process, the 2-1 sealing part 161 may move along the slope of the 1-3 sealing part 213, move beyond the 1-2 sealing part 212, and settle in the 1-1 sealing part 211. Since the 1-1 sealing part 211 to the 1-3 sealing part 213 are formed continuously and curved, the 2-1 sealing part 161 may be easily moved, and the cap 200 may close the outer case 100.

In the opening process, the 2-1 sealing part 161 may move in the opposite direction to the closing process described above.

Meanwhile, the brim part 220 may include the hook groove 221. The position of the hook groove 221 is not limited but may correspond to a position through which the hook part 230 can pass.

The hook groove 221 may include a groove straight part 221a and a groove inclined part 221b. The groove straight part 221a is located at the top of the hook groove 221 and means an area where the shape of the horizontal cross-sectional area of the hook groove 221 remains the same.

The groove inclined part 221b is located extending downward from the groove straight part 221a and refers to an area in which the horizontal cross-sectional area of the hook groove 221 increases downward. At this time, the hook groove 221 may consist of an interior surface and an exterior surface, and the exterior surface of the hook groove 221 may be inclined outward toward the bottom.

In the closing process, the hook part 230 passes through the hook groove 221, and the second part 232 may be caught on the upper surface of the brim part 220 and coupled to the hook groove 221. The second part 232 may protrude more toward the outside of the outer case 100 than the first part 231, and may be inclined toward the inside of the outer case 100 toward the top. At this time, a hook inclined part 232a refers to the inclined surface of the second part 232.

The hook inclined part 232a may be in contact with the groove inclined part 221b, so that the second part 232 may easily pass through the hook groove 221. The second part 232 may pass through the hook groove 221 and be easily coupled to the hook groove 221.

In the opening process, as described above, the user may easily disconnect the hook part 230 and the hook groove 221 by lifting the brim part 220 while pressing the first part 231. Furthermore, the elastic force of a grip part 310 of the inner case 300 applies force to the cap 200 so that the cap 200 may be easily opened.

Next, the protrusion part 400 of the inner case 300 or the outer case 100 will be described.

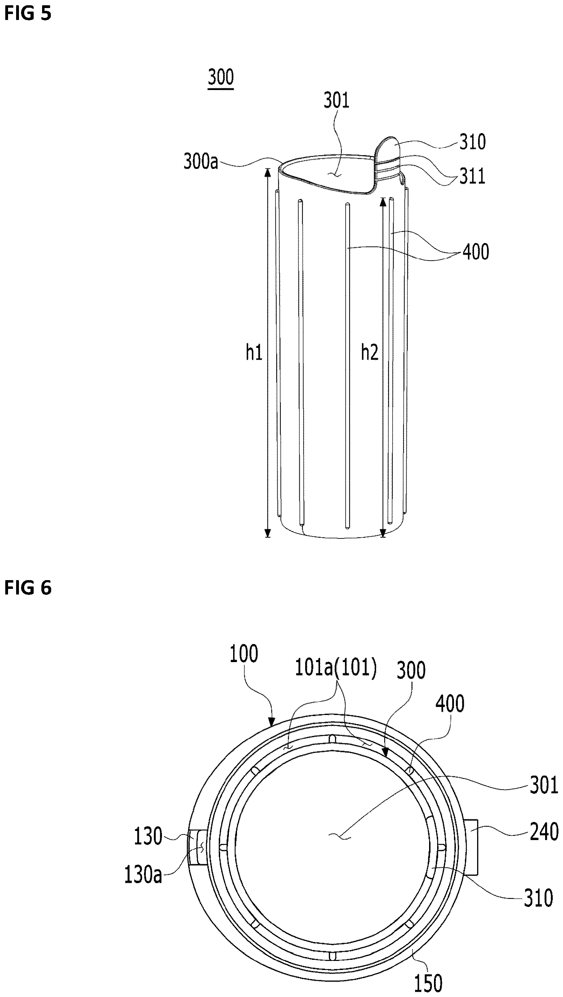

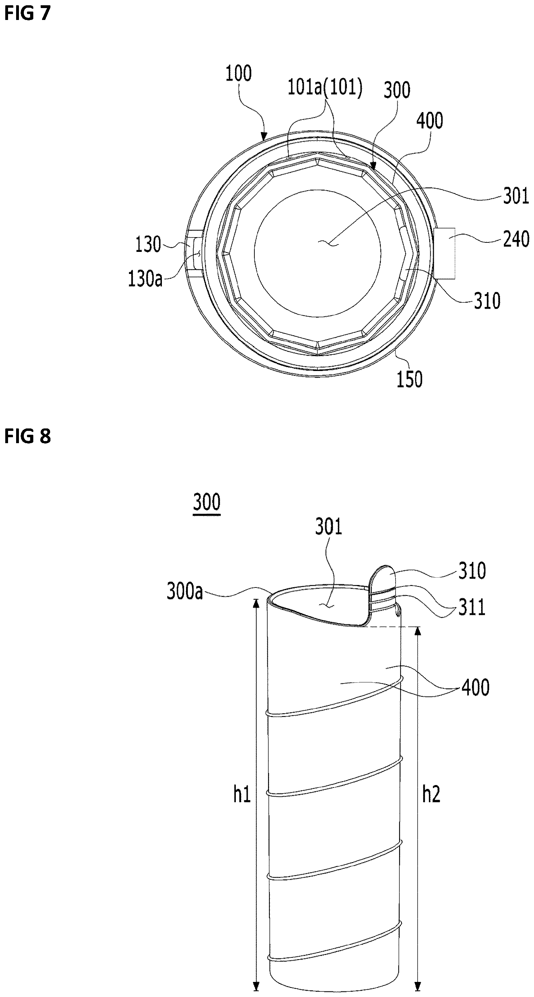

FIG. 5 is a view showing a vertical protrusion part 400 of the inner case 300 according to an embodiment of the present disclosure. FIG. 6 is a view showing the inner case 300 and an air passage 101a according to an embodiment of the present disclosure. FIG. 7 is a view showing the inner case and an air passage according to an embodiment of the present disclosure. FIG. 8 is a view showing a spiral protrusion part 400 of the inner case 300 according to an embodiment of the present disclosure.

Referring again to FIG. 4a, the outer case 100 according to an embodiment of the present disclosure may include a plurality of protrusion parts 400 formed on the interior surface thereof. The protrusion parts 400 may contact the exterior surface of the inner case 300 to form the air passage 101a in the first accommodation space 101 (see FIG. 6).

The outer case 100 may include the protrusion part 400 (inner protrusion). The protrusion part 400 may be formed to protrude inward from the interior surface of the outer case 100. The protrusion part 400 may be provided in plural numbers and may be formed in a vertical direction, but the number and shape of the protrusion part 400 are not limited.

The protrusion part 400 may contact the exterior surface of the inner case 300 and may cause friction with the inner case 300 to secure the inner case 300 to the outer case 100.

In this case, the exterior surface of the inner case 300 may be formed smooth. Smoothly formed means that there is no protruding area on the exterior surface of the inner case 300.

In addition, the protrusion part 400 may contact the exterior surface of the inner case 300 to form the air passage 101a. When the inner case 300 is inserted into the outer case 100, the air inside the outer case 100 moves along the air passage 101a and may easily induce insertion of the inner case 300.

On the other hand, when the inner case 300 is separated from the outer case 100, the air outside the outer case 100 moves along the air passage 101a and may easily induce separation of the inner case 300.

The air passage 101a created by the protrusion part 400 may be provided alone (including cases where a plurality of air passages are provided), but may be provided simultaneously with the pressing gap 110 formed on the bottom surface of the outer case 100. At this time, the pressing gap 110 may have a hole structure or a gap structure. In addition, the air passage 101a may be divided into multiple sections by the plurality of protrusion parts 400.

At this time, the air passage 101a may maintain the air pressure in the first accommodation space 101 of the outer case 100 and the external air pressure the same to facilitate separation and insertion of the inner case 300.

Referring to FIGS. 5 and 6, the inner case 300 according to an embodiment of the present disclosure may include a plurality of protrusion parts 400 formed on the exterior surface of the inner case 300. The protrusion parts 400 may contact the interior surface of the outer case 100 to form the air passage 101a in the first accommodation space 101.

The inner case 300 may include the protrusion part 400 (outer protrusion). The protrusion part 400 may be formed to protrude outward from the exterior surface of the inner case 300. The protrusion part 400 may be provided in plural numbers and may be formed in a vertical direction, but the number and shape of the protrusion part 400 are not limited.

The protrusion part 400 may contact the interior surface of the outer case 100 and may cause friction with the outer case 100 to secure the inner case 300 to the outer case 100.

In this case, the interior surface of the outer case 100 may be formed smooth. Smoothly formed means that there is no protruding area on the interior surface of the outer case 100.

In addition, the protrusion part 400 may contact the interior surface of the outer case 100 to form the air passage 101a. At this time, as described above, the protrusion part 400 may exist simultaneously with the pressing gap 110 provided on the bottom surface of the outer case 100, or may exist alone.

Referring to FIG. 7, the inner case 300 according to an embodiment of the present disclosure may have an exterior surface shaped like a polygonal pillar. The edges of the exterior surface may contact the interior surface of the outer case 100 to form the air passage 101a inside the first accommodation space 101.

The inner case 300 may have a cylindrical exterior surface, but may have the exterior surface in the shape of a polygonal pillar. The exterior surface of the inner case 300 formed in the shape of a dodecagonal pillar as shown in FIG. 7 is an example, and thus the shape of the exterior surface of the inner case 300 is not limited thereto and may be configured in various shapes.

When the exterior surface of the inner case 300 has the shape of a polygonal pillar, edges of the exterior surface of the inner case 300 may contact the interior surface of the outer case 100. At this time, the edges may form the air passage 101a inside.

Furthermore, the interior surface of the outer case 100 may have a cylindrical or polygonal pillar shape. When the interior surface of the outer case 100 has a cylindrical shape, the edge of the exterior surface of the inner case 300 comes in contact with the interior surface of the outer case 100 to form the air passage 101a in the first accommodation space 101.

Conversely, when the interior surface of the outer case 100 has the same shape as the interior surface of the outer case 100, the exterior surface of the inner case 300 and the interior surface of the outer case 100 may contact each other, and the edges of the exterior surface of the inner case 300 and the edges of the interior surface of the inner case 300 may also contact each other.

At this time, the air passage 101a may not be created, but the movement of air may be induced by the pressing gap 110 of the hole structure formed on the bottom surface of the outer case 100. In this case, the inner case 300 may be more firmly fixed to the outer case 100.

Referring to FIG. 8, the inner case 300 according to an embodiment of the present disclosure may include the thread-shaped protrusion part 400 on the exterior surface thereof.

The inner case 300 may include the protrusion part 400 (helical protrusion). The protrusion part 400 may protrude outward from the exterior surface of the inner case 300. At this time, the outer case 100 may include a spiral groove (not shown). The spiral groove may be formed by being recessed from the interior surface of the outer case 100.

The protrusion part 400 of the inner case 300 and the spiral groove of the outer case 100 are screwed together, and by the screw coupling, the inner case 300 may be inserted into the outer case 100, and be separated from the outer case 100.

Unlike the above description, the outer case 100 may include the protrusion part 400 and the inner case 300 may include the spiral groove.

In this case, the inner case 300 may be more firmly fixed to the outer case 100.

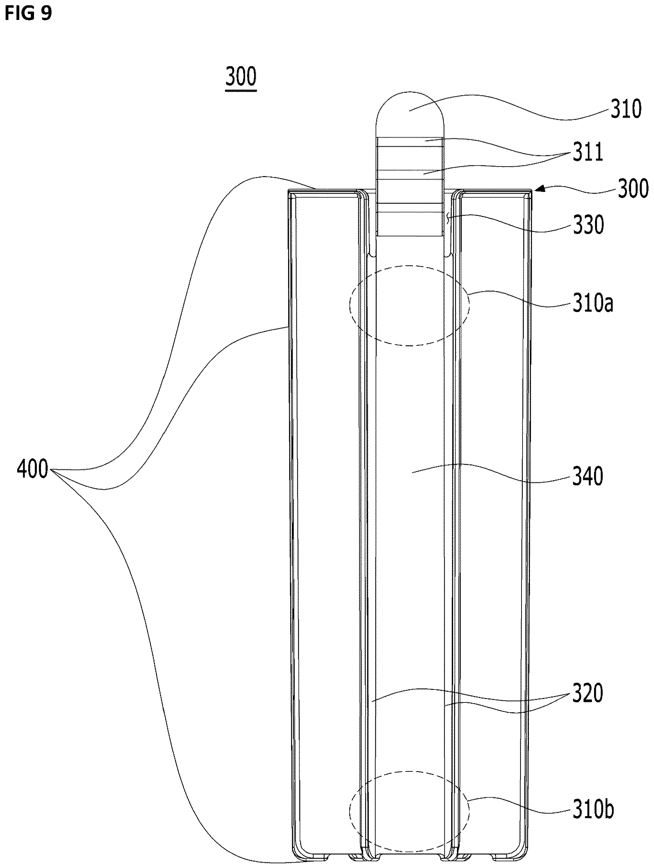

As another example, the protrusion part 400 provided on the inner case 300 may be formed along the circumference of the upper end of the inner case, and may be formed by extending from the upper end in a vertical direction in a plurality of strands. The strands may extend to the bottom surface of the inner case 300 (see FIG. 9).

Next, the structure of the fixing jaw 140 of the outer case 100 and the fixing groove 320 of the inner case 300 will be described.

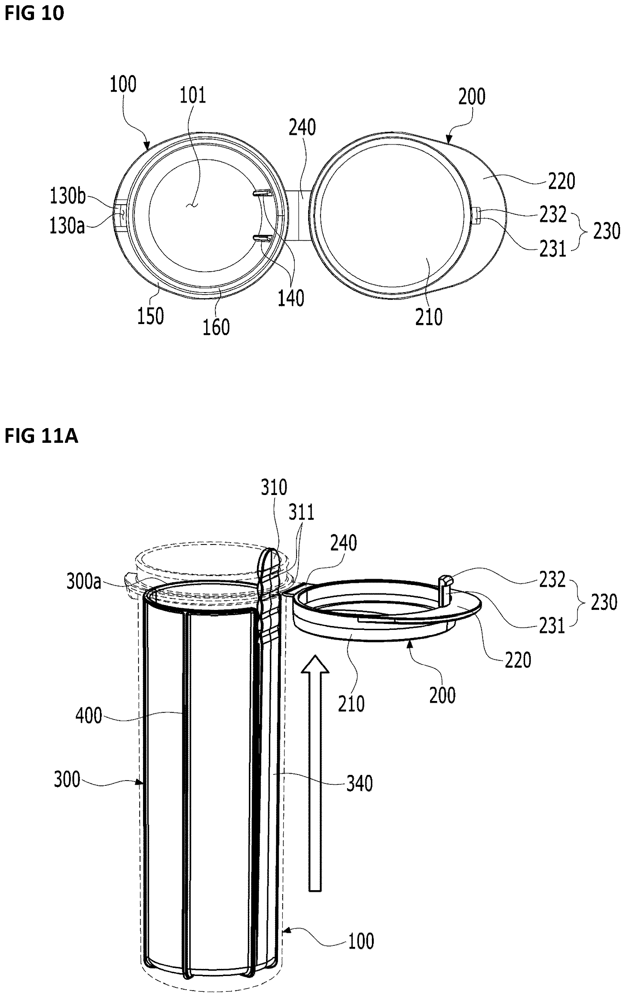

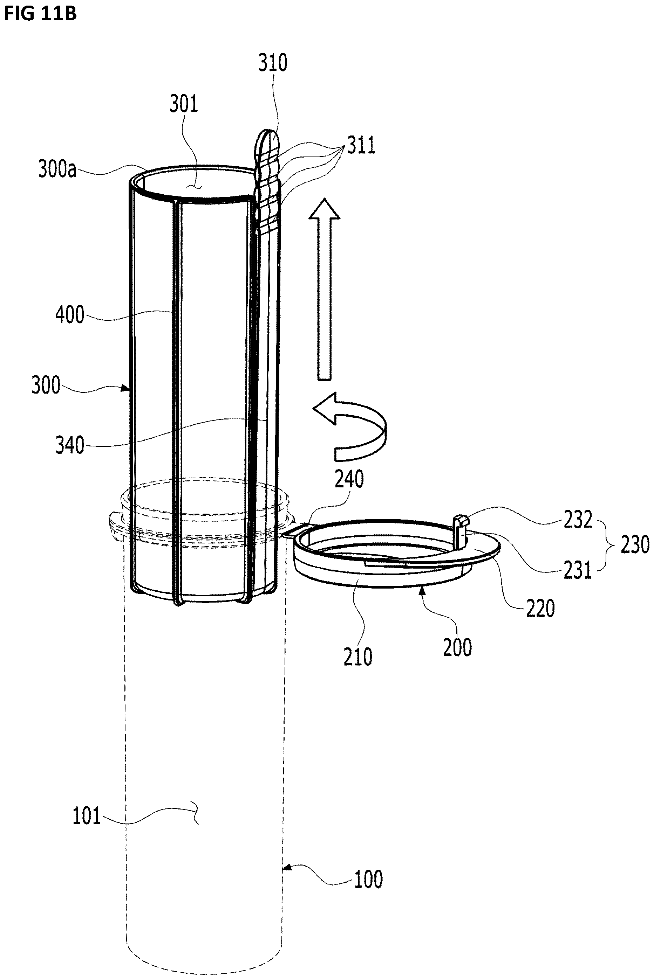

FIG. 9 is a view showing the fixing groove 320 of the inner case 300 according to an embodiment of the present disclosure. FIG. 10 is a view showing the fixing jaw 140 of outer case 100 according to an embodiment of the present disclosure. FIG. 11a is a view showing a state in which the fixing groove 320 and the fixing jaw 140 are combined according to an embodiment of the present disclosure. FIG. 11b is a view showing a state in which the fixing groove 320 and the fixing jaw 140 are separated according to an embodiment of the present disclosure.

Referring to FIGS. 9 and 10, the outer case 100 according to an embodiment of the present disclosure may further include the fixing jaw 140 formed in a vertical direction on the interior surface thereof to secure the inner case 300. The inner case 300 may include the fixing groove 320 on the exterior surface thereof through which the fixing jaw 140 passes. The fixing groove 320 may be formed to be shallower in depth from the top to the bottom of the inner case 300.

The outer case 100 may include the fixing jaw 140 formed on the interior surface thereof. The fixing jaw 140 may be formed in the vertical direction on the interior surface of the outer case 100. In a corresponding configuration, the inner case 300 may include the fixing groove 320 formed on the exterior surface thereof. The fixing groove 320 may be formed in the vertical direction on the exterior surface of the inner case 300.

The fixing jaw 140 and the fixing groove 320 are formed to correspond to each other, so that the inner case 300 may be coupled to and separated from the outer case 100 while the fixing jaw 140 is in contact with the fixing groove 320. At this time, the inner case 300 may be separated from the outer case 100 only by a translational or sliding motion.

The fixing groove 320 may be formed to be shallower in depth from the top to the bottom of the inner case 300. This structure provides the effect of firmly fixing the inner case 300 when the inner case 300 is completely inserted into the outer case 100.

Such structure also provides the effect of easily separating the inner case 300 from the outer case 100 when the inner case 300 is almost separated (before completely separated) from the outer case 100.

Referring to 11a, the inner case 300 is not able to rotate in a fully inserted state and may be provided to enable only translational or sliding motion. This effect can occur when the fixing jaw 140 enters the relatively deep upper fixing groove 320. In this fully coupled state, the inner case 300 may be firmly fixed to the outer case 100.

Referring to 11b, the inner case 300 is able to rotate in an almost separated state and may also be provided to enable translational or sliding motion. This effect can occur when the fixing jaw 140 enters the relatively shallow lower fixing groove 320. In this almost separated state, the inner case 300 is able to rotate and may be easily separated from the outer case 100.

Furthermore, the fixing groove 320 may become shallower toward the bottom of the inner case 300 and disappear at the bottom. Accordingly, the inner case 300 may have a structure that allows free rotational motion right before the inner case 300 is completely separated from the outer case 100. That is, the depth may gradually decrease continuously or discontinuously from an upper region 320a to a lower region 320b of the fixed jaw 140.

However, unlike the above description, the inner case 300 may include the fixing jaw 140, and the outer case 100 may include the fixing groove 320. In this case, the inner case insertion and separation process may be applied in the same manner as described above.

In the process of inserting the inner case 300, the inner case 300 may be increasingly firmly fixed to the outer case 100, and in the process of separating the inner case 300, the inner case 300 may be increasingly freely separated from the outer case 100.

a

Next, the grip part 310 provided in the inner case 300 will be described.

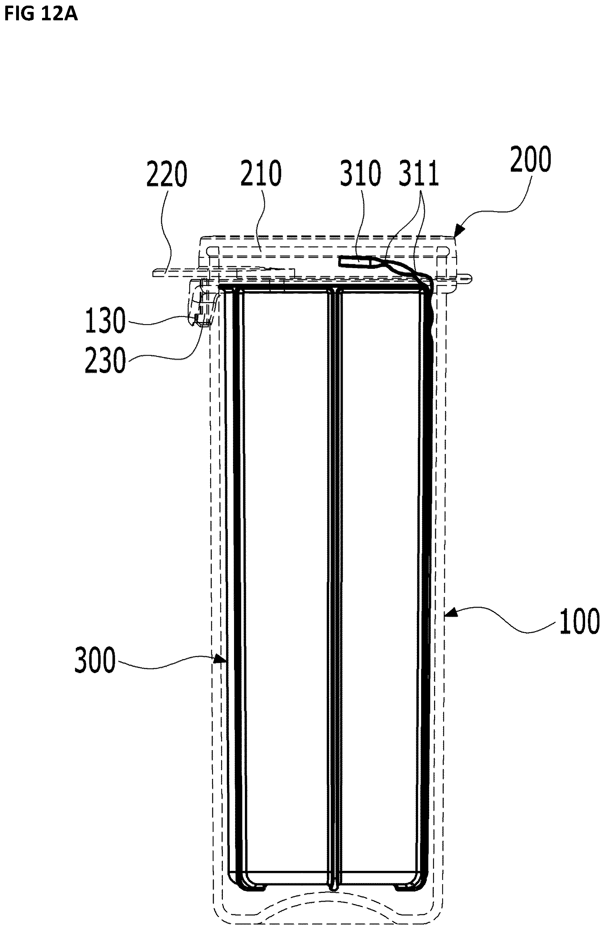

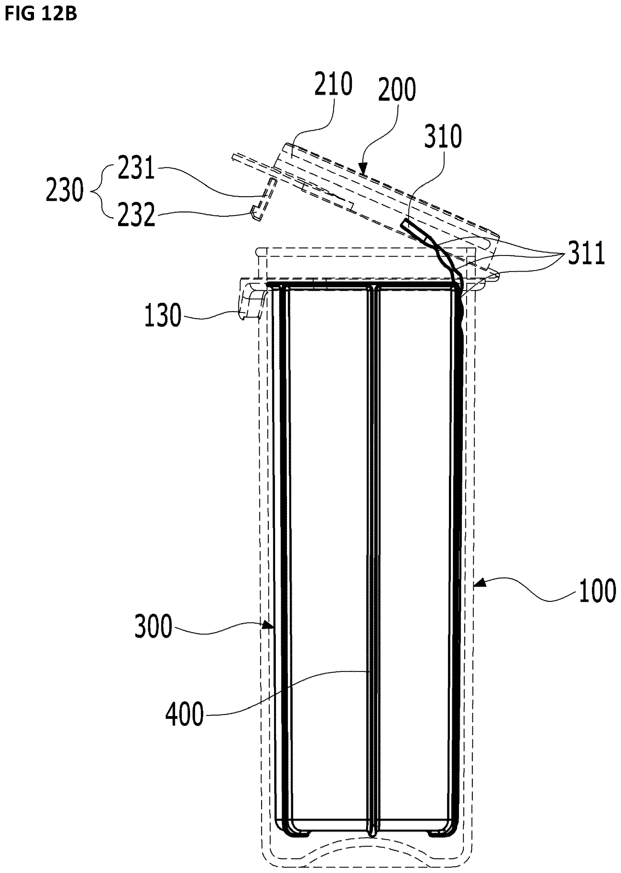

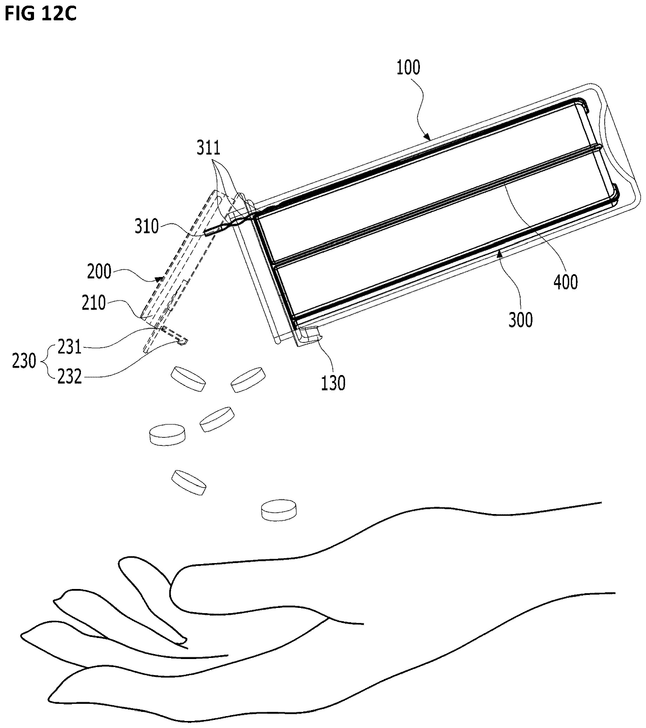

FIG. 12a is a view showing the grip part 310 in a bent state according to an embodiment of the present disclosure. FIG. 12b is a view showing changes in the grip part 310 according to an embodiment of the present disclosure. FIG. 12c is a view showing a state in which the grip part 310 prevents the cap from closing according to an embodiment of the present disclosure.

Referring to FIGS. 3a, 5, and 11a, the inner case 300 according to an embodiment of the present disclosure may include the grip part 310 that protrudes from the upper end thereof and is held by the user.

In addition, the inner case 300 according to an embodiment of the present disclosure may be formed with an upper end inclined downward from a first height h1 to a second height h2. The grip part 310 may be formed to extend upward from the second height h2.

The grip part 310 may be provided extending from the upper end of the inner case 300. In particular, the grip part 310 refers to a part held by the user to easily separate the inner case 300 from the outer case 100.

Referring again to FIG. 5, the first height h1 may refer to the highest upper end of the side of the inner case 300, and the second height h2 may refer to the lowest upper end of the side of the inner case 300. That is, the upper end of the inner case 300 may be formed to slope downward from the first height h1 to the second height h2.

This inclined structure allows the grip part 310 to be elongated and prevents the grip part 310 from protruding outside the upper case when the cap 200 is closed. The grip part 310 corresponds to the part that the user grips, and if the grip part 310 is formed too short, the function thereof cannot be implemented, and thus the grip part 310 may be formed to protrude from the second height h2.

The entire grip part 310 may be located below the upper end of the outer case 100, or a portion of the grip part 310 may be located protruding above the upper end of the outer case 100. The latter will be described later.

In addition, the upper end of the grip part 310 may be at a height that matches the upper end of the outer case 100. In this case, the upper end of the grip part 310 may contact the cap 200 so that the inner case 300 is fixed in the vertical direction inside the outer case 100.

Meanwhile, the first height h1 refers to the highest position of the sides of the inner case 300 (excluding the grip part 310), and due to this inclined structure, the second accommodation space 301, which is a space in contact with the medicine, may be secured the widest.

As the inner case 300 is formed such that the upper end thereof is inclined from the first height h1 to the second height h2, and is provided with the grip part 310 in a shape extending upward from the second height h2, it is possible to provide the grip part 310 of sufficient length to be held by the user, and at the same time, provide a structure in which the grip part 310 does not protrude to the outside of the outer case 100.

Referring to FIGS. 8, 11a, and 11b, the grip part 310 according to an embodiment of the present disclosure may include a grip groove 311 formed on at least one of the exterior and interior surfaces of the grip part 310.

In addition, the grip part 310 according to an embodiment of the present disclosure may have at least a portion thereof exposed to the upper part of the outer case 100 when the grip part 310 is inserted into the outer case 100.

The grip part 310 may include the grip groove 311. The grip groove 311 may be formed on the exterior surface and/or the interior surface of the grip part 310. That is, the grip groove 311 may be provided only on the exterior surface of the grip groove 311, may be provided only on the interior surface, and may be provided on both the interior surface and the exterior surface.

The grip groove 311 may have a shape recessed inward from one surface of the grip part 310. As shown in FIG. 8, the grip groove 311 may be formed by maintaining the same width and depth and may be provided at least one. However, the shape and number of grip grooves 311 are not limited to those shown in FIG. 8.

In contrast, as shown in FIGS. 11a and 11b, the grip groove 311 may be formed to become narrower in width in the depth direction and may be provided with at least one grip groove 311. In this case, the grip part 310 viewed from the side may have a plurality of curved shapes due to the grip grooves 311. That is, the grip part 310 may be composed of repetition of protruding areas and recessed areas.

The grip groove 311 expands the grip area when the user grips the grip part 310, making it easier to separate the inner case 300.

Referring to FIGS. 12a and 12b, the grip part 310 according to an embodiment of the present disclosure may have elasticity. The grip part 310 may be bent in the direction of the second accommodation space 301 of the inner case 300 when the cap 200 is closed. The grip part 310 may be restored to the default (original) state thereof when the cap 200 is opened.

The grip part 310 may have elasticity and may include the grip groove 311. Referring to FIGS. 11a and 11b, the grip part 310 may be maintained in a straight line as the basic state thereof. The grip part 310 may be restored to the default state thereof even if the grip part 310 is temporarily bent due to elasticity. That is, the grip part 310 may be elastically deformed and restored to the default state thereof when the external force is removed.

Referring to FIG. 12a, the grip part 310 may be bent by the cap 200 when the outer case 100 is closed. The grip part 310 may be formed long so that the user may easily grip the inner case 300. At this time, even if the grip part 310 protrudes to the outside of the outer case 100, the cap 200 may cause bending to close the opening 100a of the outer case 100. In this case, the elastic force of the grip part 310 may be smaller than the coupling force between the cap 200 and the outer case 100.

Referring to FIG. 12b, when the outer case 100 is opened, the grip part 310 may be free from bending due to elasticity. At this time, the elastic force of the grip part 310 may apply force to the cap 200 so that the cap 200 may be easily opened.

Referring to FIG. 12c, by protruding out of the outer case 100, the grip part 310 may prevent the cap 200 from being unintentionally closed even when the opening 100a of the outer case 100 is open.

Accordingly, the user can completely open the cap 200 by means of the grip part 310 by separating the hook part 230 from the ring part 130 with one touch. That is, a one-touch opening method may be implemented.

The grip part 310 is formed sufficiently long due to the above-described structure to prevent the cap 200 from being closed unintentionally, and although formed sufficiently long, the grip part 310 is flexible and bends in the direction of the second accommodation space 301 so that the outer case 100 may be easily closed, and open the cap 200 with one touch by elastic force.

In addition, referring again to FIG. 9, the inner case 300 according to an embodiment of the present disclosure may include: two fixing grooves 320 formed on the exterior surface of the inner case 300 to at least a certain height; and two fixing slits 330 formed to correspond to the fixing grooves 320 from the certain height of the inner case 300. The grip part 310 may be positioned between the two fixing slits 330 at the certain height. In addition, the inner case 300 may further include a flat part 340 between the two fixing slits 330.

As described above, the inner case 300 may include the fixing grooves 320 on the exterior surface thereof. To be specific, the inner case 300 may include the two fixing grooves 320 formed parallel to each other in a vertical direction. At this time, the fixing grooves 320 may be formed to at least the certain height of the inner case 300.

In addition, the inner case 300 may include the two fixing slits 330 formed from the certain height thereof. At this time, the position of the fixing slit 330 may correspond to the fixing groove 320. In this case, "correspond to" means that when a virtual extension line is formed from the fixing groove 320 formed in the vertical direction, the fixing slit 330 is formed along the extension line.

That is, the fixing groove 320 starting from the bottom of the inner case 300 may extend to at least the certain height, and the fixing slit 330 starting from at least the certain height may extend to the top of the inner case 300.

At this time, the grip part 310 may be formed to extend upward from at least the certain height, and the grip part 310 may be located between the two fixing slits 330.

By positioning the grip part 310 between the fixing slits 330, the grip part 310 may be formed longer, and by making the grip part 310 longer, the user's grip area may be expanded and the risk of damage when the grip part 310 is bent may be reduced.

The inner case 300 may include the flat part 340. The inner case 300 is not limited to a shape such as a prism or cylinder, but even if the inner case 300 has a cylindrical shape, it may include the flat part 340 at least in part.

The flat part 340 may be located between the two fixing slits 330, and the grip part 310 may be formed from the upper end of the flat part 340. At this time, since the upper end of the flat part 340 is made of a straight line, the connection part between the grip part 310 and the flat part 340 may also be made of a straight line. Accordingly, the grip part 310 may be easily converted to the bent state and the default state.

The eco-friendly container 1 according to an embodiment of the present disclosure is manufactured from eco-friendly materials and may be recycled. In addition, the eco-friendly container 1 is implemented in an easy-to-separate structure, allowing users to easily separate and dispose of the materials.

In addition, the outer case 100 is provided with the fitting jaw 160 whereas the cap 200 is provided with the fitting part 210 so as to couple to each other and to prevent moisture from entering the first and second accommodation spaces 101 and 301.

Furthermore, the inner case 300 is provided with the grip part 310 and is designed to be easily separated from the outer case 100. In addition, the grip part 310 is formed to protrude out of the opening 100a provided in the outer case 100 to increase the area that can be held by the user, prevents the cap 200 from closing arbitrarily, and allows the cap 200 to be opened with one touch by elastic force.

As described above, although the present disclosure has been described with reference to preferred embodiments, those skilled in the art may carry out various modifications or changes to the present disclosure without departing from the spirit and scope of the present disclosure as set forth in the patent claims below.

### [Description of Reference Numerals]

1: eco-friendly container
100: outer case
100a: opening
100b: opening area
101: first accommodation space
101a: air passage
110: pressing gap
120: pressing part
130: ring part
130a: penetration area
130b: locking area
140: fixing jaw
150: cap jaw
160: fitting jaw
161: 2-1 sealing part
162: 2-2 sealing part
170: support part
170a: first support part
170b: second support part
200: cap
210: fitting part
211: 1-1 sealing part
212: 1-2 sealing part
213: 1-3 sealing part
220: brim part
221: hook groove
221a: groove straight part
221b: groove inclined part
230: hook part
230a: hook connection part
231: first part
232: second part
232a: hook inclined part
233: third part
240: connection part
300: inner case
300a: internal opening
301: second accommodation space
310: grip part
311: grip groove
320: fixing groove
330: fixing slit
340: flat part
400: protrusion part

## Claims

1. An eco-friendly container for storing a medicine, the container comprising:
an outer case including an opening;
a cap configured to open and close the opening of the outer case; and
an inner case detachably inserted into the outer case through the opening.

2. The container of claim 1, wherein the outer case further comprises a first accommodation space for accommodating the inner case, whereas the inner case further comprises a second accommodation space for accommodating the medicine, and
the inner case is separated from the outer case by a translational motion.

3. The container of claim 1, wherein the outer case is made of a material including PET, and the inner case is made of a material including zeolite.

4. The container of claim 1, wherein the outer case comprises a pressing part provided on a bottom surface thereof to push up the inner case from an outside of the outer case.

5. The container of claim 4, wherein the outer case comprises a pressing gap formed along a circumference of the pressing part to deform the pressing part.

6. The container of claim 1, wherein the outer case comprises a cap jaw provided on an upper part of the outer case and protruding along a circumference of the outer case.

7. The container of claim 1, wherein the outer case further comprises a ring part located at a top of the outer case and forming a penetration area, and the cap comprises a hook part extending toward a bottom of the cap,
wherein the hook part passes through the penetration area and combines with the ring part.

8. The container of claim 7, wherein the cap further comprises:
a fitting part for inserting an upper end of the outer case into an interior of the cap; and
a brim part formed by extending from the fitting part toward an outside of the cap, and
the hook part extends from a lower surface of the brim part.

9. The container of claim 1, wherein the outer case comprises: a fitting jaw provided along an upper exterior surface of the outer case; and a hook part formed by connecting to the outer case, and
the cap comprises: a fitting part for inserting the fitting jaw into an interior of the cap; and a hook groove through which the hook part passes and joins.

10. The container of claim 1, wherein the outer case further comprises a plurality of protrusion parts formed on an interior surface thereof,
wherein the protrusion parts contact an exterior surface of the inner case to create an air passage in the first accommodation space.

11. The container of claim 1, wherein the inner case comprises a plurality of protrusion parts formed on an exterior surface thereof,
wherein the protrusion parts contact an interior surface of the outer case to create an air passage in the first accommodation space.

12. The container of claim 1, wherein the inner case has an exterior surface in a shape of a polygonal pillar, and edges of the exterior surface contact an interior surface of the outer case to create an air passage inside the first accommodation space.

13. The container of claim 1, wherein the inner case comprises a thread-shaped protrusion part on an exterior surface thereof.

14. The container of claim 1, wherein the outer case further comprises a fixing jaw provided in a vertical direction on an interior surface thereof to secure the inner case, and the inner case comprises a fixing groove on an exterior surface thereof through which the fixing jaw passes,
wherein the fixing groove becomes shallower in depth from a top to a bottom of the inner case.

15. The container of claim 1, wherein the inner case comprises a grip part that protrudes from an upper end thereof and is held by a user.

16. The container of claim 15, wherein the inner case is formed such that the upper end thereof slopes downward from a first height to a second height, and
the grip part is formed to extend upward from the second height.

17. The container of claim 15, wherein the grip part comprises a grip groove provided on at least one of exterior and interior surfaces thereof.

18. The container of claim 15, wherein the grip part has elasticity, and bends in a direction of a second accommodation space of the inner case when the cap is closed, and is restored to a default state thereof when the cap is opened.

19. An ecofriendly container that is inserted into an outer case and sealed with a cap, the container comprising:
an inner case provided with a grip part,
wherein the grip part comprises a grip groove provided on exterior and interior surfaces thereof, is at least partially exposed to an upper part of the outer case when inserted into the outer case, is bent when the cap is closed, and is restored to a default state thereof by pushing the cap when the cap is opened.

20. The container of claim 19, wherein the inner case comprises:
two fixing grooves provided on an exterior surface thereof to at least a certain height; and
two fixing slits provided to correspond to the fixing grooves from the certain height, and
the grip part is positioned between the two fixing slits from the certain height.
